(19) **Europäisches Patentamt / European Patent Office / Office européen des brevets**

(11) **EP 4 714 587 A1**

(12) **EUROPEAN PATENT APPLICATION**
published in accordance with Art. 153(4) EPC

(43) Date of publication:
**25.03.2026 Bulletin 2026/13**

(21) Application number: **24863168.1**

(22) Date of filing: **04.09.2024**

(51) International Patent Classification (IPC):
**B23K 37/04** (2006.01)   **B23K 26/21** (2014.01)
**B23K 26/14** (2014.01)   **H01M 50/566** (2021.01)

(52) Cooperative Patent Classification (CPC):
**B23K 26/14; B23K 26/21; B23K 37/04;
H01M 50/566**

(86) International application number:
**PCT/KR2024/013274**

(87) International publication number:
**WO 2025/053587 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.09.2023 KR 20230117782**

(71) Applicant: **LG Energy Solution, Ltd.
Seoul 07335 (KR)**

(72) Inventor: **PARK, Hoan Young
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **WELDING JIG AND LASER WELDING DEVICE INCLUDING SAME**

(57) In a jig configured to feed gas to a laser welding target and discharge the gas, the welding jig according to a first embodiment of the present disclosure may include an outer jig into which the gas is fed and an inner jig that is inserted into the outer jig along an insertion direction to form a gap with the outer jig, and configured to receive the gas fed into the outer jig through the gap and discharge the gas. The outer jig may include an outer body into which the inner jig is inserted, and forming the gap with the inner jig, and a pair of feed units located at two sides of the outer body, and configured to feed the gas to the outer body, a feed passage along which the fed gas flows may be formed in the pair of feed units, a communication passage may be formed in the outer body and the pair of feed units to bring the feed passage and the gap into communication with each other, and directions of the gas flow in the pair of feed passages may be opposite to each other.

FIG.4

**Description**

**TECHNICAL FIELD**

**CROSS-REFERENCE TO RELATED APPLICATIONS**

The present application claims priority to Korean Patent Application No. 10-2023-0117782 filed on September 5, 2023 in the Republic of Korea, the disclosure of which is incorporated herein by reference.

**TECHNICAL FIELD**

The present disclosure relates to a welding jig used in a welding process in the manufacture of secondary batteries and a laser welding apparatus including the same.

**BACKGROUND ART**

To solve the problems of environmental pollution from the use of petroleum resources and energy shortage due to depletion of petroleum resources, research and development is being done to produce power based on eco-friendly energy sources. In particular, many studies are being conducted on secondary batteries that can be repeatedly charged/discharged and are used in a wide range of applications, and the studies are done in a variety of aspects of secondary batteries such as material, structure, process and stability.

In general, the types of secondary batteries include nickel cadmium batteries, nickel hydrogen batteries, lithium-ion batteries, lithium-ion polymer batteries and so on. The secondary batteries are used in not only small products such as digital cameras, P-DVD, MP3P, mobile phones, PDA, Portable Game Device, Power Tool and E-bike, but also large products requiring high output such as electric vehicles or hybrid electric vehicles and energy storage systems capable of storing surplus energy or renewable energy and energy storage systems for backup.

To manufacture secondary batteries, first, an electrode active material slurry is applied to a positive current collector and a negative current collector to manufacture a positive electrode and a negative electrode, and the positive electrode and the negative electrode are stacked on two sides of a separator to form an electrode assembly of a predetermined shape. Additionally, the electrode assembly is received in a battery case, an electrolyte is injected into the battery case which in turn, is sealed.

To protect the manufactured secondary batteries from external impacts, heat and vibration, and provide electrical energy with higher output and higher efficiency, a plurality of secondary batteries is coupled and received in a case to manufacture a battery module. A controller is coupled to the plurality of secondary batteries to transmit and receive an electrical signal to manage or operate all the plurality of secondary batteries together.

When connecting the plurality of secondary batteries in series or in parallel, the secondary batteries are electrically connected by laser welding electrode leads of the secondary batteries. For example, after arranging the plurality of secondary batteries facing each other, laser welding is performed by emitting a laser to the welding target with the electrode leads stacked on top of each other.

However, weld quality is degraded by oxidation reaction and spatter produced during laser welding. To prevent this problem, there is an attempt to spray inert gas, for example, nitrogen gas to the welding target to keep air from contacting the welding target to prevent oxidation reaction, and discharge spatter and chemical byproducts through a suction tool. In this case, there is also another problem that the welding target is nonuniformly formed due to non-constant injection of inert gas.

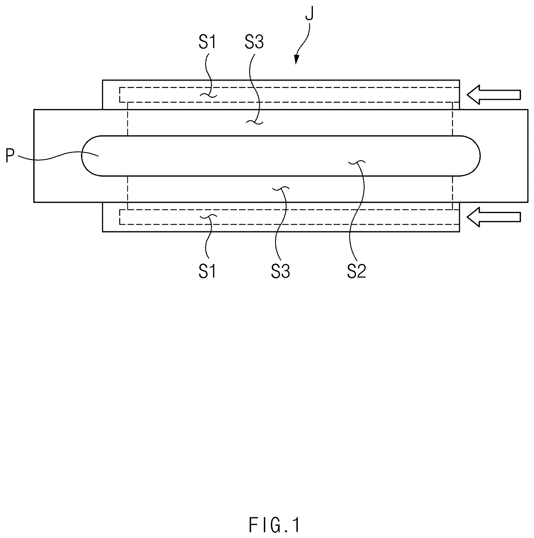

Specifically, FIG. 1 is a plan view of a welding jig J according to a comparative embodiment.

Referring to FIG. 1, the welding jig J according to the comparative embodiment in a coupled state to a welding apparatus contacts the welding target P. For example, the welding apparatus may carry out welding by emitting a laser to locally heat and thermally melt the welding target P. In this case, the welding jig J is mounted and coupled to a head portion at the lower side of the welding apparatus, and fixes the welding apparatus to the welding target P.

The welding jig J feeds inert gas to the welding target P to suppress oxidation reaction by air. For example, the welding jig J feeds inert gas, for example, nitrogen gas to the welding target P. Specifically, the welding jig J may receive nitrogen gas from a gas tank installed outside through a feed passage S1, and move the nitrogen gas entering the feed passage S1 to a welding space S2 that contacts the welding target P, to bring the nitrogen gas into contact with the welding target P.

The welding space S2 is a space that contacts the welding target P, and is a space through which the laser emitted from a laser unit passes to reach the welding target P.

The feed passage S1 is formed at two sides of the welding space S2, and the directions of gas entering the pair of feed passages S1 are one direction as shown in FIG. 1. In addition, an internal passage S3 that brings the feed passage S1 and the welding space S2 into communication with each other is an integrally formed slot hole structure.

According to the structure of the welding jig J, nitrogen gas is only fed in one direction and a large amount of nitrogen gas enters the welding space S2 in a short time, so nitrogen gas does not uniformly reach the welding target P and spatter is irregularly formed.

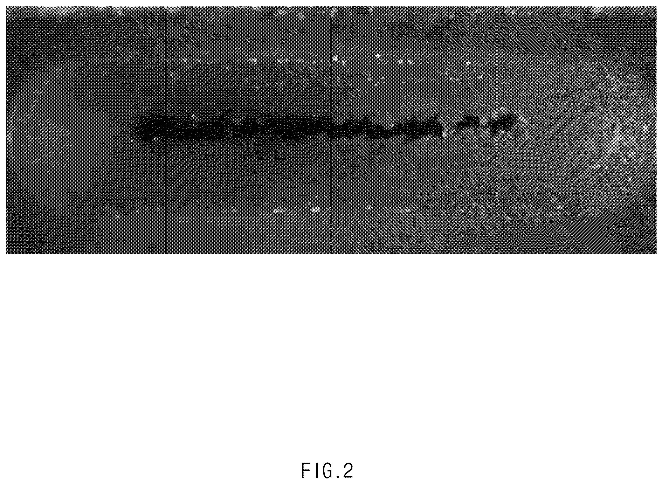

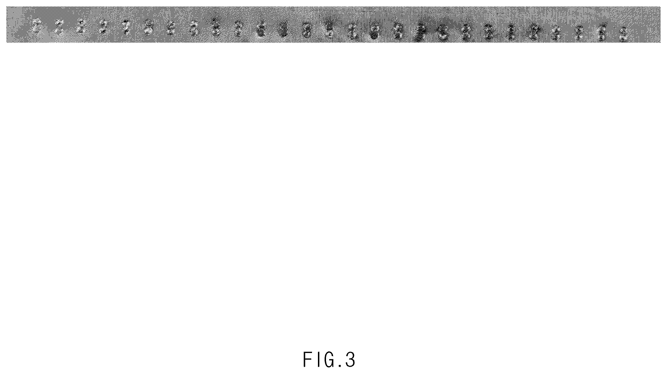

FIG. 2 is a diagram showing spatter formed at the part welded by the welding jig J according to the comparative embodiment, and FIG. 3 is a diagram showing the part welded by the welding jig J according to the comparative embodiment.

Referring to FIG. 2, it is found that much spatter is formed in one direction in which nitrogen gas is fed, that is, in the right direction on the basis of FIG. 2. In other words, it is found that much spatter accumulate and build up at the right part of the welding target. This is because gas flows fast at the right part by the nitrogen gas fed in one direction and thus more sparks are produced by laser welding.

Additionally, referring to FIG. 3, it is found that nonuniform welding is done at the welding target P. In other words, regarding the welding level of the welding site (Dot), left and right welding sites are nonuniformly welded, resulting in low weld quality. Specifically, on the basis of FIG. 3, left welding sites are relatively uniformly welded, while right welding sites are nonuniformly welded, resulting in low weld quality.

Accordingly, the above-described problems occur by the welding jig J according to the comparative embodiment, so there is a need for welding jigs for preventing oxidation reaction by air and spatter, and injecting inert gas to the welding target more uniformly.

## SUMMARY

### TECHNICAL PROBLEM

The present disclosure is designed to solve the above-described problems, and therefore the present disclosure is directed to providing a welding jig for spraying inert gas to a welding target to keep air from contacting the welding target and a laser welding apparatus including the same.

The present disclosure is further directed to providing a welding jig designed to uniformly inject inert gas to a welding target and a laser welding apparatus including the same.

### TECHNICAL SOLUTION

In a jig configured to feed gas to a laser welding target and discharge the gas, the welding jig according to a first embodiment of the present disclosure may include an outer jig into which the gas is fed, and an inner jig that is inserted into the outer jig along an insertion direction to form a gap with the outer jig, and configured to receive the gas fed into the outer jig through the gap and discharge the gas.

The outer jig may include an outer body into which the inner jig is inserted, and forming the gap with the inner jig, and a pair of feed units located at two sides of the outer body, and configured to feed the gas to the outer body, a pair of feed passages along which the fed gas flows may be formed in the pair of feed units, a communication passage may be formed in the outer body and the pair of feed units to bring the feed passages and the gap into communication with each other, and directions of the gas flow in the pair of feed passages may be opposite to each other.

The pair of feed units may include a pair of inlets formed in one surface, the pair of inlets being in communication with the feed passages to inject the gas, and directions in which the pair of inlets are formed may be opposite to each other.

One end of the feed passage may be in communication with the inlet, and the other end of the feed passage may be spaced a predetermined distance apart from the other surface of the feed unit opposite to the one surface of the feed unit.

The communication passage may include a plurality of communication passages.

The feed passage may be formed along a length direction of the feed unit, and the plurality of communication passages may be arranged along a length direction of the feed passage.

An interval between the plurality of communication passages may increase as it goes along the feed direction of gas in the feed unit.

The length direction of the feed passage and a direction in which the plurality of communication passages is formed may be perpendicular to each other.

The inner jig may include a first part formed along the insertion direction and a second part formed from an end of the first part along the insertion direction, and having a narrower cross-sectional area as it goes in the insertion direction, and the first part and the second part may form the gap with an inner surface of the outer jig.

When a height from a point where the first part and the second part are connected to an end of the second part in the insertion direction is $H_1$, and a height from the feed unit to an end of the outer body is $H_2$, a conditional equation may be satisfied: $H_1/H_2 = 0.714$ to $0.786$.

A slot hole may be formed in a contact surface of the outer body that contacts the laser welding target, and when a height from a point where the first part and the second part are connected to an end of the second part in the insertion direction is $H_1$, and a length of the slot hole is $L_1$, a conditional equation may be satisfied: $H_1/L_1 = 0.233$ to $0.256$.

When a height from a point where the first part and the second part are connected to an end of the second part in the insertion direction is $H_1$, $H_1$ may be from 10 mm to 11 mm.

An empty space in communication with the gap may be formed inside the first part and the second part.

A laser welding apparatus according to a second embodiment of the present disclosure may include a body having a laser path along which a laser passes, a welding jig coupled to a lower side of the body and contacting a welding target, including a shape in which the laser path is extended inside to allow the laser passing through the body to reach the welding target, and configured to feed gas to the welding target, a laser unit configured to emit the laser to the welding target along the laser path formed in the body and the welding jig, and a discharge unit run through the body, and configured to discharge the gas fed by the welding jig.

The welding jig may include an outer jig into which the gas is fed, and an inner jig that is inserted into the outer jig along an insertion direction to form a gap with the outer jig, to allow the gas fed into the outer jig to enter through the gap, and transmit the fed gas to the discharge unit.

The outer jig may include an outer body into which the inner jig is inserted, and forming the gap with the inner jig, and a pair of feed units located at two sides of the outer body, and configured to feed the gas to the outer body, a pair of feed passages in which the fed gas flows may be formed in the pair of feed units, a communication passage may be formed in the outer body and the pair of feed units to bring the feed passages and the gap into communication with each other, and directions of the gas flow in the pair of feed passages may be opposite to each other.

The pair of feed units may include a pair of inlets formed in one surface, the pair of inlets being in communication with the feed passages to inject the gas, and directions in which the pair of inlets are formed may be opposite to each other.

The communication passage may include a plurality of communication passages along a length direction of the feed unit, and the plurality of communication passages may be arranged along a length direction of the feed passage.

An interval between the plurality of communication passages may increase as it goes along a feed direction of gas in the feed unit.

The inner jig may include a first part formed along the insertion direction, and having an inside in communication with the discharge unit, and a second part formed from an end of the first part along the insertion direction, having a narrower cross-sectional area as it goes in the insertion direction, and having an inside in communication with the inside of the first part, and the first part and the second part may form the gap with an inner surface of the outer jig.

When a height from a point where the first part and the second part are connected to an end of the second part in the insertion direction is $H_1$, and a height from the feed unit to an end of the outer body is $H_2$, a conditional equation may be satisfied: $H_1/H_2 = 0.714$ to $0.786$.

A slot hole may be formed in a contact surface of the outer body that contacts the welding target, and when a height from a point where the first part and the second part are connected to an end of the second part in the insertion direction is $H_1$, and a length of the slot hole is $L_1$, a conditional equation may be satisfied: $H_1/L_1 = 0.233$ to $0.256$.

An empty space in communication with the gap may be formed inside the first part and the second part, a slot hole may be formed in a contact surface of the outer body that contacts the welding target to allow the laser emitted from the laser unit to pass through, and the laser unit may emit the laser to allow the laser to pass through the empty space inside the first part and the second part and the slot hole and reach the welding target.

## ADVANTAGEOUS EFFECTS

According to an exemplary embodiment of the present disclosure, inert gas may be sprayed onto the welding target to keep air from contacting the welding target, thereby suppressing oxidation reaction by air and preventing spatter, leading to improved weld quality.

According to an exemplary embodiment of the present disclosure, it may be possible to uniformly inject inert gas to the welding target, thereby preventing welding defects and spatter.

Besides, the effects of the present disclosure may include effects that can be easily predicted by those skilled in the art from the exemplary embodiments of the present disclosure.

## BRIEF DESCRIPTION OF THE DRAWINGS

The accompanying drawings illustrate the exemplary embodiments of the present disclosure and together with the following detailed description, serve to provide a better understanding of the technical aspect of the present disclosure, and thus the present disclosure should not be construed as being limited to the drawings.

FIG. 1 is a plan view of a welding jig according to a comparative embodiment.

FIG. 2 is a diagram showing spatter formed at a part welded by a welding jig according to a comparative embodiment.

FIG. 3 is a diagram showing a part welded by a welding jig according to a comparative embodiment.

FIG. 4 is a perspective view of a welding jig according to a first embodiment of the present disclosure.

FIG. 5 is a partial cutaway view of a welding jig according to a first embodiment of the present disclosure.

FIG. 6 is an exploded view of a welding jig according to a first embodiment of the present disclosure.

FIG. 7 is a top projection view of a welding jig according to a first embodiment of the present disclosure.

FIG. 8 is a side projection view of a welding jig according to a first embodiment of the present disclosure.

FIG. 9 is a bottom view of an outer jig according to a first embodiment of the present disclosure.

FIG. 10 is a cross-sectional view of a laser welding apparatus according to a second embodiment of the present disclosure.

## DETAILED DESCRIPTION

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, the terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation.

### First embodiment

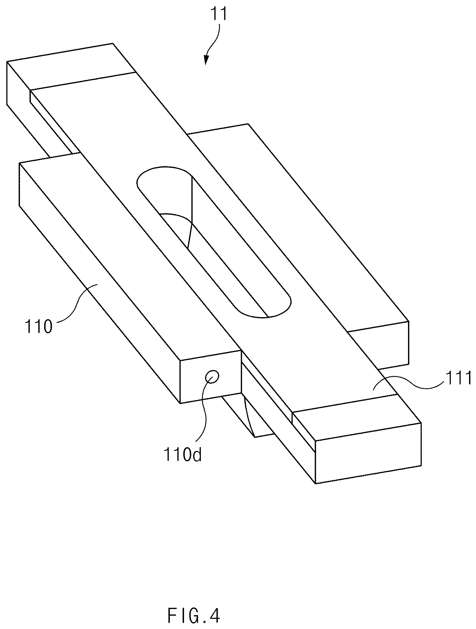

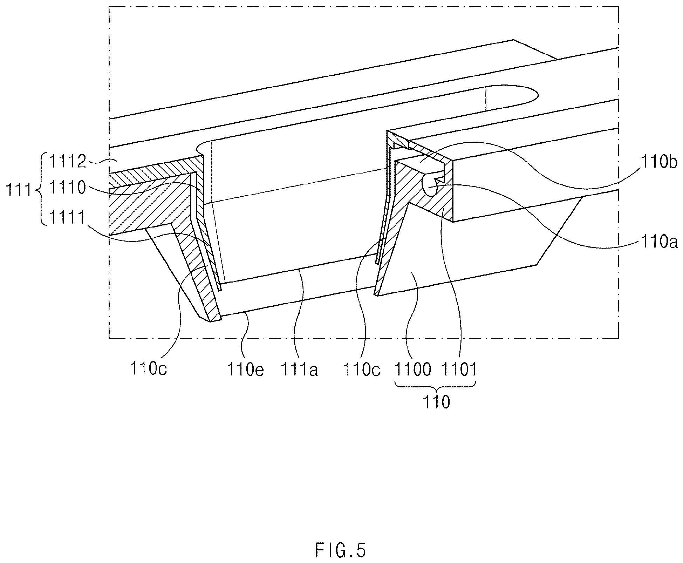

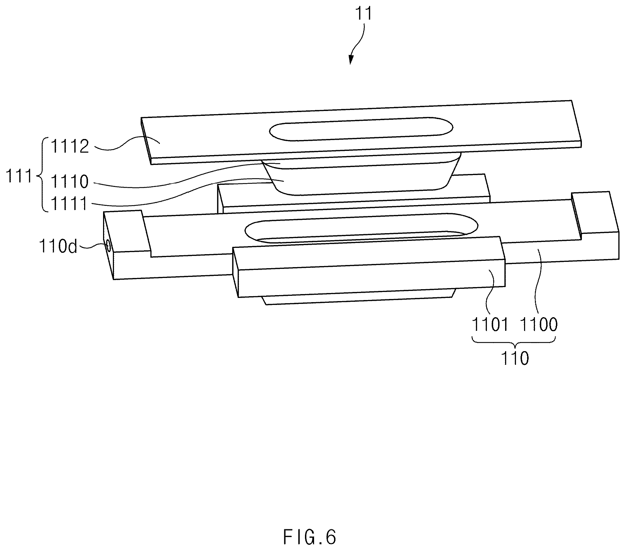

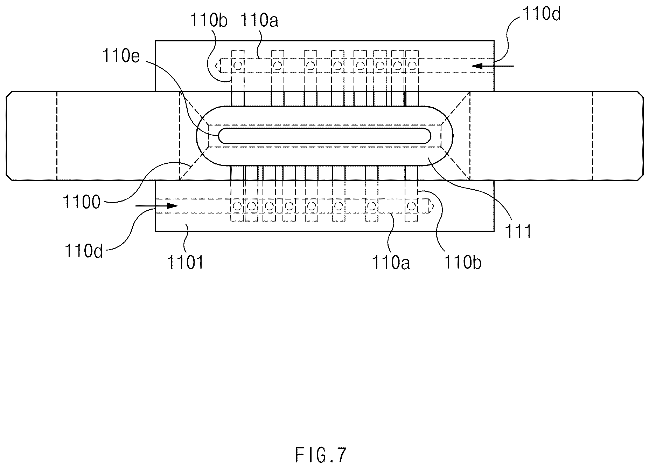

FIG. 4 is a perspective view of a welding jig 11 according to a first embodiment of the present disclosure, FIG. 5 is a partial cutaway view of the welding jig 11 according to the first embodiment of the present disclosure, FIG. 6 is an exploded view of the welding jig 11 according to the first embodiment of the present disclosure, and FIG. 7 is a top projection view of the welding jig 11 according to the first embodiment of the present disclosure.

Referring to FIGS. 4 to 7, the welding jig 11 according to the first embodiment of the present disclosure may contact a welding target, and feed inert gas to the welding target. For example, during laser welding, the welding jig 11 may feed inert gas, for example, nitrogen gas to parts being laser welded to keep air from contacting the welding target and prevent spatter produced by welding.

However, the inert gas is not limited to nitrogen gas, and may include any other gas that does not react with hydrogen and oxygen in air.

The welding jig 11 may have a hollow central portion through which the laser passes, and the laser may pass through the welding jig 11 and reach the welding target. In this case, the welding jig 11 may receive nitrogen gas from a gas supply device (not shown) installed outside, feed the nitrogen gas to the welding target and discharge the nitrogen gas, thereby suppressing oxidation reaction by air and improving weld quality.

Here, the welding target may be a portion of an electrode lead extended from an electrode assembly or a portion of an electrode tab formed in the electrode assembly.

In the case of a pouch-type secondary battery, the electrode lead is a part that is connected to the electrode assembly and exposed to the outside of a pouch case, and may play a role as an electrode terminal that is electrically connected to other secondary batteries or external devices.

A plurality of electrode leads in a stacked state is coupled, and the plurality of electrode leads may be coupled to each other when heated and thermally melted through laser welding.

In addition, in a state that the plurality of electrode leads is close contact with each other, the welding jig 11 may apply pressure to the top of the plurality of electrode leads to bring the plurality of electrode leads into closer contact with each other. This is because it is necessary to perform the welding process in a state that the plurality of electrode leads is in closer contact with each other in order to improve weld quality.

The welding jig 11 may include an outer jig 110 and an inner jig 111.

The outer jig 110 may be located at the outside of the inner jig 111. In other words, the inner jig 111 may be located at the inside of the outer jig 110. Additionally, gas may be fed into the outer jig 110, and the gas fed into the outer jig 110 may enter the inner jig 111. For example, the inner jig 111 may be inserted into the outer jig 110 along an insertion direction to form a gap 110c with the outer jig 110. The inner jig 111 may receive the gas fed into the outer jig 110 through the gap 110c and discharge the gas.

Here, referring to FIG. 6, the insertion direction may refer to a downward direction in which the inner jig 111 moves toward the outer jig 110. In other words, in a state that the inner jig 111 is located above the outer jig 110, the inner jig 111 may move downward along the insertion direction and be inserted into the outer jig 110, and the outer jig 110 and the inner jig 111 may be coupled.

The outer jig 110 may include an outer body 1100 and a pair of feed units 1101.

The inner jig 111 may be inserted into the outer body 1100. For example, the outer body 1100 may have an empty space inside, and the inner jig 111 may be inserted into the empty space inside the outer body 1100. In this case, as described above, the gap 110c may be formed between the inner surface of the outer body 1100 and the inner jig 111, so the outer body 1100 and the inner jig 111 may be spaced a predetermined distance apart from each other.

The cross-sectional area of the outer body 1100 may become smaller as it approaches to the welding target. For example, the lower surface of the outer body 1100 may contact the welding target, and the outer body 1100 may include a shape in which the cross-sectional area becomes smaller as it goes downwards.

A slot hole 110e may be formed in a contact surface of the outer body 1100 that contacts the welding target. The laser may reach the welding target through the slot hole 110e. For example, the inner jig 111 may be located at the inside of the outer body 1100, the inner jig 111 may also have an empty space inside, and the laser may reach the slot hole 110e via the empty space of the inner jig 111 and then reach the welding target.

Through the structure of the slot hole 110e as described above, welding may be performed by emitting the laser in a state that the slot hole 110e is in contact with the welding target and nitrogen gas may be fed to the welding target. By the above-described structure, it may be possible to improve weldability of the welding target, and prevent infiltration of external impurities into the welding target during the welding process.

The pair of feed units 1101 may be located at two sides of the outer body 1100. Additionally, the feed units 1101 may feed gas to the outer body 1100. In other words, gas may be fed into the feed units 1101, and the gas fed into the feed units 1101 may move to the outer body 1100.

Specifically, the pair of feed units 1101 may include a pair of inlets 110d formed in one surface to inject gas. That is, each inlet 110d may be formed in one surface of each feed unit 1101. In this instance, directions in which the pair of inlets 110d are formed may be opposite to each other.

A feed passage 110a in which the fed gas flows may be formed in the feed units 1101. Each of the pair of inlets 110d may be in communication with each feed passage 110a. The directions of the gas flow in the pair of feed passages 110a may be opposite to each other.

One end of the feed passage 110a may be in communication with the inlet 110d. The other end of the feed passage 110a may be spaced a predetermined distance apart from the other surface of the feed unit 1101 opposite to the one surface of the feed unit 1101. That is, the pair of feed passages 110a may extend from the inlets 110d formed at the opposite sides toward the other surface of the feed units 1101, but may not extend to the other surface of the feed units 1101. In other words, the pair of feed passages 110a may extend from the inlets 110d in the opposite directions.

A communication passage 110b may be formed in the outer body 1100 and the pair of feed units 1101 to bring the feed passage 110a and the gap 110c into communication with each other. For example, the communication passage 110b may include a plurality of communication passages, and the direction in which the communication passages 110b are formed and the direction in which the feed passage 110a is formed may be perpendicular to each other. In other words, the length direction of the feed passage 110a and the direction in which the plurality of communication passages 110b is formed may be perpendicular to each other.

Specifically, the feed unit 1101 may be formed along the side of the outer body 1100, and the feed passage 110a may be formed along the length direction of the feed unit 1101. In this instance, the plurality of communication passages 110b may be arranged along the length direction of the feed passage 110a, and the communication passages 110b may be perpendicular to the length direction of the feed passage 110a.

The interval between the plurality of communication passages 110b may increase as it goes along the feed direction of gas in the feed unit 1101. In other words, the interval between the plurality of communication passages 110b may increase as it goes away from the inlet 110d. That is, the interval between the plurality of communication passages 110b may gradually increase along the direction in which the feed passage 110a is formed, starting from the inlet 110d.

Through the feature that gas flows in the pair of feed passages 110a in the opposite directions and the feature that the interval between the plurality of communication passages 110b increases as it goes along the feed direction of gas, the welding jig 11 may reduce the difference in gas flow velocity between the left side and right side of the welding target. Additionally, the welding jig 11 may reduce the difference in gas concentration between the left and right sides of the welding target.

As a result, the gas flow velocity and gas concentration at the left and right sides of the welding target may be uniformly maintained, leading to uniform distribution of inert gas on the welding target, thereby preventing nonuniform welding caused by oxidation reaction and spatter. That is, by the welding jig 11 according to the first embodiment of the present disclosure, welding may be performed more uniformly, and weld quality may be improved.

The significance and effect by the feature that gas flows in the pair of feed passages 110a in the opposite directions and the feature that the interval between the plurality of communication passages 110b increases as it goes along the feed direction of gas will be described in more detail in the experiment details and result table as described below.

The inner jig 111 may include an inner body 1112, a first part 1110 and a second part 1111.

The inner body 1112 may be coupled to the outer jig 110. For example, the inner body 1112 may be located at an upper side of the outer body 1100 and positioned between the pair of feed units 1101. In other words, the inner body 1112 may be inserted and coupled between the outer body 1100 and the pair of feed units 1101 such that it is surrounded by the outer body 1100 and the pair of feed units 1101.

The first part 1110 may be formed along the insertion direction. For example, the first part 1110 may extend from the inner body 1112 toward the welding target. In other words, the first part 1110 may extend downward from the inner body 1112. That is, the outer body 1100 may include a shape that protrudes from the pair of feed units 1101 toward the downward direction, and the first part 1110 may extend from the inner body 1112 along a direction in which the outer body 1100 protrudes.

The second part 1111 may be formed along the insertion direction from the end of the first part 1110. For example, one end of the first part 1110 may be connected to the inner body 1112, and the other end of the first part 1110 may be connected to the second part 1111. In other words, the first part 1110 may extend in the downward direction from the inner body 1112, and the second part 1111 may extend in the downward direction from the lower surface of the first part 1110.

The cross-sectional area of the second part 1111 may become narrower as it goes in the insertion direction. That is, the second part 1111 may include a shape in which the width becomes narrower as it goes downwards.

The first part 1110 and the second part 1111 may form the gap 110c with the inner surface of the outer jig 110. That is, in a state that the inner body 1112 is coupled to the upper surface of the outer body 1100, the first part 1110 and the second part 1111 may be spaced a predetermined distance apart from the inner surface of the outer body 1100. As the first part 1110 and the second part 1111 are spaced apart from the outer body 1100, the gap 110c may be formed between the first part 1110 and the second part 1111 and the outer body 1100.

An empty space in communication with the gap 110c may be formed inside the first part 1110 and the second part 1111. For example, the second part 1111 may include a center hole 111a formed to bring the gap 110c and the empty space inside the first part 1110 and the second part 1111 into communication with each other.

As a result, gas fed into the inlet 110d may move to the communication passage 110b along the feed passage 110a, and the gas entering the communication passage 110b may go through the center hole 111a along the gap 110c, and reach the empty space inside the first part 1110 and the second part 1111.

While the gas moves to the center hole 111a along the gap 110c, the gas may contact the welding target located at the slot hole 110e, and suppress oxidation reaction occurring at the welding target. Additionally, spatter produced from the welding target or impurities by the welding may go through the center hole 111a along with the gas and move to the empty space inside the first part 1110 and the second part 1111, and then be discharged.

Additionally, the laser directed toward the welding jig 11 may go through the center hole 111a via the empty space inside the first part 1110 and the second part 1111, and reach the welding target located at the slot hole 110e, where laser welding may be carried out.

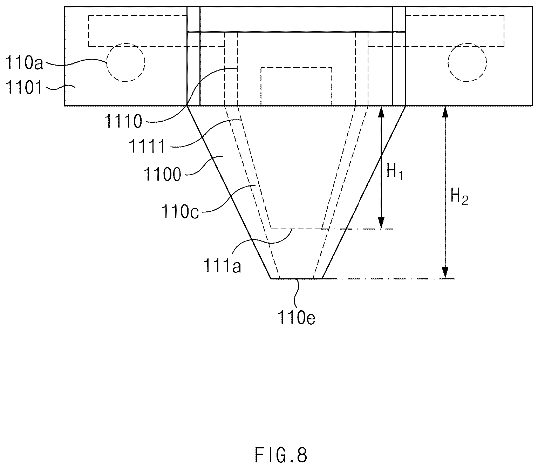

FIG. 8 is a side projection view of the welding jig 11 according to the first embodiment of the present disclosure.

Referring to FIG. 8, when a height from a point where the first part 1110 and the second part 1111 are connected to an end of the second part 1111 in the insertion direction is $H_1$, and a height from the feed unit 1101 to an end of the outer body 1100 is $H_2$, a conditional equation may be satisfied: $H_1/H_2 = 0.714$ to $0.786$. In other words, when the height $H_2$ from the feed unit 1101 to the end of the outer body 1100 is 14 mm, the height $H_1$ from the point where the first part 1110 and the second part 1111 are connected to the end of the second part 1111 in the insertion direction may be from 10 mm to 11 mm.

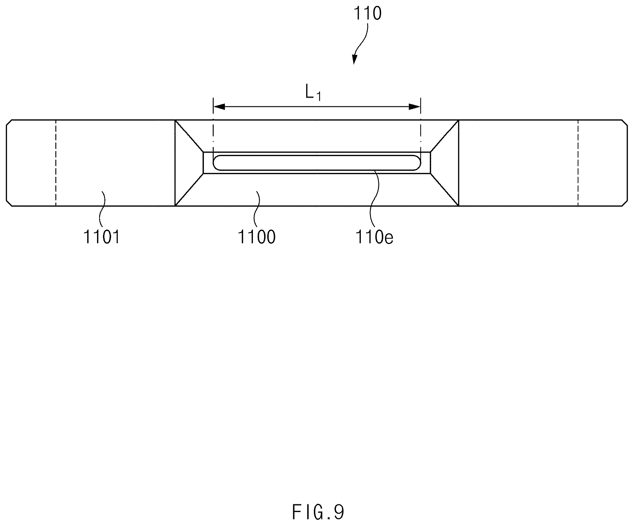

FIG. 9 is a bottom view of the outer jig 110 according to the first embodiment of the present disclosure.

Referring to FIG. 9, when the height from the point where the first part 1110 and the second part 1111 are connected to the end of the second part 1111 in the insertion direction is $H_1$, and a length of the slot hole 110e is $L_1$, a conditional equation may be satisfied: $H_1/L_1 = 0.233$ to $0.256$. In other words, when the length $L_1$ of the slot hole 110e is 43 mm, the height $H_1$ from the point where the first part 1110 and the second part 1111 are connected to the end of the second part 1111 in the insertion direction may be from 10 mm to 11 mm.

According to the structure having the above-described ratio, gas fed into the welding jig 11 may flow at a more uniform velocity, and the concentration of gas reaching the welding target may be maintained more uniformly. Specifically, as opposed to the comparative embodiment, the welding jig 11 according to the first embodiment of the present disclosure may reduce the difference in gas flow velocity between the left and right sides of the welding target. Additionally, as opposed to the comparative embodiment, the welding jig 11 according to the first embodiment of the present disclosure may reduce the difference in gas concentration between the left and right sides of the welding target.

As a result, the gas flow velocity and gas concentration at the left and right sides of the welding target may be uniformly maintained, leading to uniform distribution of inert gas on the welding target, thereby preventing nonuniform welding caused by oxidation reaction and spatter. That is, by the welding jig 11 according to the first embodiment of the present disclosure, welding may be performed more uniformly, and weld quality may be improved.

Hereinafter, the experimental details and results for demonstrating the effect of the present disclosure will be described. Specifically, a plurality of experiments is carried out with varying particular structures of the welding jig, and as for the gas flow at the welding target, flow velocity uniformity of inert gas and concentration uniformity of inert gas are measured for each particular structure of the welding jig. In this case, as the inert gas for the experiment, nitrogen gas is desirable.

In a state that the height $H_2$ from the feed unit to the end of the outer body is 14 mm, and the length $L_1$ of the slot hole is 43 mm, inert gas is fed into the pair of inlets at a constant velocity, and flow velocity uniformity and concentration uniformity of the left and right sides of the welding target are measured by analyzing the gas flow using a simulation program.

In the experiment, the experimental example is classified according to 1) the shape of the communication passage, 2) the feed direction of inert gas, and 3) the height $H_1$ from the point where the first part and the second part are connected to the end of the second part in the insertion direction.

Specifically, according to the shape of the communication passage, the structure that brings the feed passage and the gap into communication with each other is classified into three: 1) a slit shape of a single hole type, 2) an equidistant structure of a multiple hole type, 3) a non-equidistant structure of a multiple hole shape with the increasing interval along the gas feed direction (the first embodiment of the present disclosure).

Subsequently, according to the feed direction of inert gas, it is classified into two: 1) gas is fed into the pair of inlets in the same direction (in this case, the pair of inlets are formed in the same direction) as in the comparative embodiment, and 2) gas is fed in the opposite directions as in the first embodiment of the present disclosure.

Finally, the height $H_1$ from the point where the first part and the second part are connected to the end of the second part in the insertion direction is divided into five: 2 mm, 5 mm, 8 mm, 10 mm and 11 mm.

Each experimental example is differently set for each particular structure, and the plurality of experimental examples of different experimental conditions is shown in Table 1 below.

[Table 1]

| Experimental example | Communication passage shape | Gas feed direction | Height ($H_1$) |
|---|---|---|---|
| 1 | Single hole (slit shape) | Same direction | 2 mm |
| 2 | | | 5 mm |
| 3 | | | 8 mm |
| 4 | | | 10 mm |
| 5 | | | 11 mm |
| 6 | | Opposite directions | 2 mm |
| 7 | | | 5 mm |
| 8 | | | 8 mm |
| 9 | | | 10 mm |
| 10 | | | 11 mm |
| 11 | Multiple holes (equidistant) | Same direction | 2 mm |
| 12 | | | 5 mm |
| 13 | | | 8 mm |
| 14 | | | 10 mm |
| 15 | | | 11 mm |
| 16 | Multiple holes (equidistant) | Opposite directions | 2 mm |
| 17 | | | 5 mm |
| 18 | | | 8 mm |
| 19 | | | 10 mm |
| 20 | | | 11 mm |

(continued)

| Experimental example | Communication passage shape | Gas feed direction | Height (H$_1$) |
|---|---|---|---|
| 21 | Multiple holes (non-equidistant) | Same direction | 2 mm |
| 22 | | | 5 mm |
| 23 | | | 8 mm |
| 24 | | | 10 mm |
| 25 | | | 11 mm |
| 26 | | Opposite directions | 2 mm |
| 27 | | | 5 mm |
| 28 | | | 8 mm |
| 29 | | | 10 mm |
| 30 | | | 11 mm |

The flow velocity uniformity and gas concentration uniformity of the welding target are measured for each experimental example, and the welding target is divided into left and right and flow velocity uniformity and gas concentration uniformity are measured.

Specifically, when $V_L$ or R-local = local velocity of left (L) or right (R) welding target, $\overline{V}_L$ or R-local = average velocity of left (L) or right (R) welding target, $A_L$ or R-local = local area of left (L) or right (R) welding target, $A_{L\ or\ R\text{-total}}$ = area of left (L) or right (R) welding target, $MF_{L\ or\ R\text{-local}}$ = mass fraction of left (L) or right (R) welding target, and $\overline{MF}_{L\ or\ R\text{-local}}$ = average mass fraction of left (L) or right (R) welding target, coefficients of left flow velocity uniformity, right flow velocity uniformity, left concentration uniformity and right concentration uniformity are shown in Equations 1 to 4 below.

<Equation 1>

$$\text{Left velocity uniformity} = 1 - \frac{\sqrt{\frac{\Sigma(v_{L-local}-\overline{v}_{L-local})^2 \cdot A_{L-local}}{A_{L-total}}}}{\overline{v}_{L-local}},$$

<Equation 2>

$$\text{Right velocity uniformity} = 1 - \frac{\sqrt{\frac{\Sigma(v_{R-local}-\overline{v}_{R-local})^2 \cdot A_{R-local}}{A_{R-total}}}}{\overline{v}_{R-local}},$$

<Equation 3>

$$\text{Left concentration uniformity} = 1 - \frac{\sqrt{\frac{\Sigma(MF_{L-local}-\overline{MF}_{L-local})^2 \cdot A_{L-local}}{A_{L-total}}}}{\overline{MF}_{L-local}},$$

<Equation 4>

$$\text{Right concentration uniformity} = 1 - \frac{\sqrt{\frac{\sum(MF_{R-local} - \overline{MF}_{R-local})^2 \cdot A_{R-local}}{A_{R-total}}}}{\overline{MF}_{R-local}}$$

First, on the basis of the height $H_1$ of 10 mm, the measurement results of left and right flow velocity uniformity and concentration uniformity of the welding target according to the shape of the communication passage and the gas feed direction are shown in Table 2 below.

[Table 2]

| Experiment al example | Left flow velocity uniformi ty | Right flow velocity uniformi ty | Differen ce in flow velocity uniformi ty | Left concentrati on uniformity | Right concentrati on uniformity | Difference in concentrati on uniformity |
|---|---|---|---|---|---|---|
| 4 | 0.590 | 0.510 | 0.080 | 1.000 | 1.000 | 0.000 |
| 9 | 0.586 | 0.601 | 0.015 | 1.000 | 1.000 | 0.000 |
| 14 | 0.690 | 0.821 | 0.131 | 1.000 | 1.000 | 0.000 |
| 19 | 0.673 | 0.694 | 0.021 | 1.000 | 1.000 | 0.000 |
| 24 | 0.637 | 0.741 | 0.104 | 1.000 | 1.000 | 0.000 |
| 29 | 0.717 | 0.714 | 0.003 | 1.000 | 1.000 | 0.000 |

Subsequently, on the basis of the shape of the communication passage of non-equidistant multiple holes in shape and the opposite gas feed directions, the measurement results of left and right flow velocity uniformity of the welding target according to the height $H_1$ from the point where the first part and the second part are connected to the end of the second part in the insertion direction are shown in Table 3 below.

[Table 3]

| Experimental example | Left flow velocity uniformity | Right flow velocity uniformity | Difference in flow velocity uniformity |
|---|---|---|---|
| 26 | 0.517 | 0.524 | 0.007 |
| 27 | 0.714 | 0.689 | 0.025 |
| 28 | 0.512 | 0.480 | 0.032 |
| 29 | 0.720 | 0.717 | 0.003 |
| 30 | 0.770 | 0.764 | 0.006 |

As a result, like the welding jig 11 according to the first embodiment of the present disclosure, it can be seen that in the case of the structure (non-equidistant structure) of the increasing interval between the plurality of communication passages 110b along the gas feed direction, the opposite feed directions of gas and the height $H_1$ of from 10 mm to 11 mm, the difference in uniformity between the left and right sides of the welding target is the lowest. Accordingly, by the welding jig 11 according to the first embodiment of the present disclosure, it may be possible to uniformly maintain the gas flow velocity and gas concentration at the left and right sides of the welding target, leading to uniform distribution of inert gas on the welding target, thereby preventing nonuniform welding caused by oxidation reaction and spatter. That is, by the welding jig 11 according to the first embodiment of the present disclosure, welding may be performed more uniformly, and weld quality may be improved.

## Second embodiment

Hereinafter, a laser welding apparatus 1 according to a second embodiment of the present disclosure will be described. The laser welding apparatus 1 according to the second embodiment of the present disclosure relates to a welding apparatus including the above-described welding jig 11 according to the first embodiment of the present disclosure, and hereinafter, the overlapping description with the foregoing description of the welding jig 11 according to the first embodiment of the present disclosure is omitted.

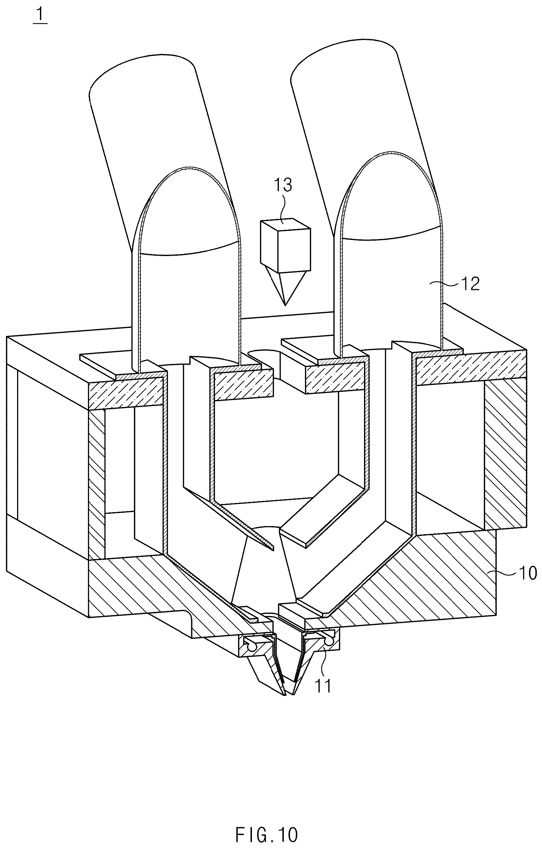

FIG. 10 is a cross-sectional view of the laser welding apparatus 1 according to the second embodiment of the present disclosure.

Referring to FIG. 10, the laser welding apparatus 1 according to the second embodiment of the present disclosure may perform the laser welding process by emitting the laser to the welding target. For example, the laser welding apparatus 1 while in close contact with the welding target may perform the welding process by emitting the laser to the welding target along the internal path, and heating and thermally melting the welding target by the laser.

In addition, the laser welding apparatus 1 may feed inert gas, for example, nitrogen gas to the welding target to keep air from contacting the welding target and prevent spatter produced by welding.

The laser welding apparatus 1 may include a body 10, the welding jig 11, the laser unit 13 and a discharge unit 12.

The body 10 may have a laser path along which the laser passes. For example, the body 10 may have the path that is run therethrough inside, along which the laser passes. In other words, the body 10 may have the empty space inside, through which the laser emitted from the laser unit 13 as described below passes and reaches the welding target. Additionally, the body 10 may include a structure in which the welding jig 11 and the discharge unit 12 as described below are coupled.

The welding jig 11 may contact the welding target, and feed inert gas to the welding target. For example, the welding jig 11 may be coupled to the lower side of the body 10 and come into contact with the welding target. The welding jig 11 may receive nitrogen gas from the gas supply device (not shown) installed outside, feed the nitrogen gas to the welding target and discharge the nitrogen gas, thereby suppressing oxidation reaction by air and improving weld quality.

The welding jig 11 may include a shape in which the laser path formed in the body 10 is extended inside to allow the laser passing through the body 10 to reach the welding target. In other words, the welding jig 11 may have a hollow central portion through which the laser passes, and the laser may pass through the welding jig 11 and reach the welding target.

The welding jig 11 may include the outer jig 110 and the inner jig 111. The outer jig 110 may be located at the outside of the inner jig 111. In other words, the inner jig 111 may be located at the inside of the outer jig 110. Additionally, gas may be fed into the outer jig 110, and the gas fed into the outer jig 110 may enter the inner jig 111. For example, the inner jig 111 may be inserted into the outer jig 110 along the insertion direction to form the gap 110c with the outer jig 110. The inner jig 111 may receive the gas fed into the outer jig 110 through the gap 110c and discharge the gas.

The outer jig 110 may include the outer body 1100 and the pair of feed units 1101.

The inner jig 111 may be inserted into the outer body 1100. For example, the outer body 1100 may have the empty space inside, and the inner jig 111 may be inserted into the empty space inside the outer body 1100. The cross-sectional area of the outer body 1100 may become smaller as it approaches to the welding target.

The slot hole 110e may be formed in the contact surface of the outer body 1100 that contacts the welding target. The laser may pass through the slot hole 110e and reach the welding target. For example, the inner jig 111 may be located at the inside of the outer body 1100, the inner jig 111 may also have the empty space inside, and the laser may reach the slot hole 110e via the empty space of the inner jig 111 and then reach the welding target.

The pair of feed units 1101 may be located at two sides of the outer body 1100. Additionally, the feed units 1101 may feed gas to the outer body 1100. Specifically, the pair of feed units 1101 may include the pair of inlets 110d in one surface to inject gas. That is, each inlet 110d may be formed in one surface of each feed unit 1101. In this instance, directions in which the pair of inlets 110d are formed may be opposite to each other.

The feed passage 110a in which the fed gas flows may be formed in the feed units 1101. Each of the pair of inlets 110d may be in communication with each feed passage 110a. The directions of the gas flow in the pair of feed passages 110a may be opposite to each other.

One end of the feed passage 110a may be in communication with the inlet 110d. The other end of the feed passage 110a may be spaced the predetermined distance apart from the other surface of the feed unit 1101 opposite to the one surface of the feed unit 1101. The pair of feed passages 110a may extend from the inlets 110d in the opposite directions.

The communication passage 110b may be formed in the outer body 1100 and the pair of feed units 1101 to bring the feed passage 110a and the gap 110c into communication with each other. The plurality of communication passages 110b may be arranged along the length direction of the feed passage 110a, and the communication passages 110b may be perpendicular to the length direction of the feed passage 110a.

The interval between the plurality of communication passages 110b may increase as it goes along the feed direction of gas in the feed unit 1101. In other words, the interval between the plurality of communication passages 110b may increase as it goes away from the inlet 110d.

The inner jig 111 may include the inner body 1112, the first part 1110 and the second part 1111.

The inner body 1112 may be coupled to the outer jig 110. For example, the inner body 1112 may be located at an upper side of the outer body 1100, and positioned between the pair of feed units 1101.

The first part 1110 may be formed along the insertion direction. For example, the first part 1110 may extend from the inner body 1112 toward the welding target.

The second part 1111 may be formed from the end of the first part 1110 along the insertion direction. For example, one end of the first part 1110 may be connected to the inner body 1112, and the other end of the first part 1110 may be connected to the second part 1111.

The cross-sectional area of the second part 1111 may become narrower as it goes in the insertion direction. That is, the second part 1111 may include a shape in which the width becomes narrower as it goes downwards.

The first part 1110 and the second part 1111 may form the gap 110c with the inner surface of the outer jig 110. That is, in a state that the inner body 1112 is coupled to the upper surface of the outer body 1100, the first part 1110 and the second part 1111 may be spaced the predetermined distance apart from the inner surface of the outer body 1100.

The empty space in communication with the gap 110c may be formed inside the first part 1110 and the second part 1111. For example, the second part 1111 may include the center hole 111a formed to bring the gap 110c and the empty space inside the first part 1110 and the second part 1111 into communication with each other.

As a result, gas fed into the inlet 110d may move to the communication passage 110b along the feed passage 110a, and the gas entering the communication passage 110b may go through the center hole 111a along the gap 110c, and reach the empty space inside the first part 1110 and the second part 1111. The gas reaching the empty space inside the first part 1110 and the second part 1111 may be released to the atmosphere through the discharge unit 12 as described below.

When the height from the point where the first part 1110 and the second part 1111 are connected to the end of the second part 1111 in the insertion direction is $H_1$, and the height from the feed unit 1101 to the end of the outer body 1100 is $H_2$, the conditional equation may be satisfied: $H_1/H_2 = 0.714$ to $0.786$. In other words, when the height $H_2$ from the feed unit 1101 to the end of the outer body 1100 is 14 mm, the height $H_1$ from the point where the first part 1110 and the second part 1111 are connected to the end of the second part 1111 in the insertion direction may be from 10 mm to 11 mm.

In addition, when the height from the point where the first part 1110 and the second part 1111 are connected to the end of the second part 1111 in the insertion direction is $H_1$, the length of the slot hole 110e is $L_1$, the conditional equation may be satisfied: $H_1/L_1 = 0.233$ to $0.256$. In other words, when the length $L_1$ of the slot hole 110e is 43 mm, the height $H_1$ from the point where the first part 1110 and the second part 1111 are connected to the end of the second part 1111 in the insertion direction may be from 10 mm to 11 mm.

The laser unit 13 may emit the laser to the welding target along the laser path formed in the body 10 and the welding jig 11. Specifically, in a state that the welding jig 11 is disposed below the body 10, and the lower surface of the welding jig 11 contacts the welding target, the welding jig 11 and the body 10 may include a portion that is run through in the vertical direction from the welding target.

For example, the laser path may be run through along the slot hole 110e, the space between the outer jig 110 and the inner jig 111, the center hole 111a, the empty space inside the first part 1110 and the second part 1111, and the empty space inside the body 10 from the welding target.

The laser unit 13 located above the body 10 may emit the laser to the welding target in the vertical direction, to allow the laser to move along the laser path and reach the welding target, and the welding target may be heated and thermally melted by the laser, thereby performing the welding process.

The discharge unit 12 may be run through the body 10 to release the gas fed by the welding jig 1 1 to the atmosphere. For example, the inside of the discharge unit 12 may be in communication with the empty space inside the inner jig 111. Specifically, the gas fed into the outer jig 110 may keep air from contacting the welding target to suppress oxidation reaction, and the gas including impurities produced by spatter may enter the empty space inside the inner jig 111, and be released to the atmosphere along the internal passage of the discharge unit 12.

The foregoing description has been made to describe the technical aspect of the present disclosure by way of example, and persons having ordinary skill in the technical field pertaining to the present disclosure would have made a variety of modifications and changes without departing from the essential features of the present disclosure.

Therefore, the disclosed embodiments are provided to describe the technical aspect of the present disclosure and not intended to be limiting, and the technical scope of the present disclosure is not limited by these embodiments.

The scope of protection of the present disclosure should be interpreted by the appended claims, and it should be interpreted that all the technical spirit within the equivalent scope is included in the scope of protection of the present disclosure.

[List of Reference Numerals]

| 1: | Laser welding apparatus | 10: | Body |
|---|---|---|---|
| 11: | Welding jig | 12: | Discharge unit |
| 13: | Laser unit | 110: | Outer jig |

(continued)

| | | | |
|---|---|---|---|
| 111: | Inner jig | 1100: | Outer body |
| 1101: | Feed unit | 110a: | Feed passage |
| 110b: | Communication passage | 110c: | Gap |
| 110d: | Inlet | 110e: | Slot hole |
| 111a: | Center hole | 1110: | First part |
| 1111: | Second part | 1112: | Inner body |

**Claims**

1.  A welding jig configured to feed gas to a laser welding target and discharge the gas, the welding jig comprising:

    an outer jig into which the gas is fed; and
    an inner jig that is inserted into the outer jig along an insertion direction to form a gap with the outer jig, and configured to receive the gas fed into the outer jig through the gap and discharge the gas,
    wherein the outer jig includes:

    an outer body into which the inner jig is inserted, and forming the gap with the inner jig; and
    a pair of feed units located at two sides of the outer body, and configured to feed the gas to the outer body,
    wherein a pair of feed passages along which the fed gas flows is formed in the pair of feed units,
    wherein a communication passage is formed in the outer body and the pair of feed units to bring the feed passages and the gap into communication with each other, and
    wherein directions of the gas flow in the pair of feed passages are opposite to each other.

2.  The welding jig according to claim 1,

    wherein the pair of feed units include a pair of inlets formed in one surface, the pair of inlets being in communication with the feed passages to inject the gas, and
    wherein directions in which the pair of inlets are formed are opposite to each other.

3.  The welding jig according to claim 2,

    wherein one end of the feed passage is in communication with the inlet, and
    wherein the other end of the feed passage is spaced a predetermined distance apart from the other surface of the feed unit opposite to the one surface of the feed unit.

4.  The welding jig according to claim 3,
    wherein the communication passage includes a plurality of communication passages.

5.  The welding jig according to claim 4,

    wherein the feed passage is formed along a length direction of the feed unit, and
    wherein the plurality of communication passages is arranged along a length direction of the feed passage.

6.  The welding jig according to claim 5,
    wherein an interval between the plurality of communication passages increases as it goes along the feed direction of gas in the feed unit.

7.  The welding jig according to claim 5,
    wherein the length direction of the feed passage and a direction in which the plurality of communication passages is formed are perpendicular to each other.

8.  The welding jig according to claim 1, wherein the inner jig includes:

    a first part formed along the insertion direction; and
    a second part formed from an end of the first part along the insertion direction, and having a narrower cross-sectional area as it goes in the insertion direction, and

wherein the first part and the second part form the gap with an inner surface of the outer jig.

9. The welding jig according to claim 8,
wherein when a height from a point where the first part and the second part are connected to an end of the second part in the insertion direction is $H_1$, and a height from the feed unit to an end of the outer body is $H_2$, a conditional equation is satisfied: $H_1/H_2$ = 0.714 to 0.786.

10. The welding jig according to claim 8,

wherein a slot hole is formed in a contact surface of the outer body that contacts the laser welding target, and wherein when a height from a point where the first part and the second part are connected to an end of the second part in the insertion direction is $H_1$, and a length of the slot hole is $L_1$, a conditional equation is satisfied: $H_1/L_1$ = 0.233 to 0.256.

11. The welding jig according to claim 8,
wherein when a height from a point where the first part and the second part are connected to an end of the second part in the insertion direction is $H_1$, $H_1$ is from 10 mm to 11 mm.

12. The welding jig according to claim 8,
wherein an empty space in communication with the gap is formed inside the first part and the second part.

13. A laser welding apparatus comprising:

a body having a laser path along which a laser passes;
a welding jig coupled to a lower side of the body and contacting a welding target, including a shape in which the laser path is extended inside to allow the laser passing through the body to reach the welding target, and configured to feed gas to the welding target;
a laser unit configured to emit the laser to the welding target along the laser path formed in the body and the welding jig; and
a discharge unit run through the body, and configured to discharge the gas fed by the welding jig,
wherein the welding jig includes:

an outer jig into which the gas is fed; and
an inner jig that is inserted into the outer jig along an insertion direction to form a gap with the outer jig, to allow the gas fed into the outer jig to enter through the gap, and transmit the fed gas to the discharge unit,
wherein the outer jig includes:

an outer body into which the inner jig is inserted, and forming the gap with the inner jig; and
a pair of feed units located at two sides of the outer body, and configured to feed the gas to the outer body,
wherein a pair of feed passages in which the fed gas flows is formed in the pair of feed units,
wherein a communication passage is formed in the outer body and the pair of feed units to bring the feed passages and the gap into communication with each other, and
wherein directions of the gas flow in the pair of feed passages are opposite to each other.

14. The laser welding apparatus according to claim 13,

wherein the pair of feed units include a pair of inlets formed in one surface, the pair of inlets being in communication with the feed passage to inject the gas, and
wherein directions in which the pair of inlets are formed are opposite to each other.

15. The laser welding apparatus according to claim 13,

wherein the communication passage includes a plurality of communication passages along a length direction of the feed unit, and
wherein the plurality of communication passages is arranged along a length direction of the feed passage.

16. The laser welding apparatus according to claim 15,

wherein an interval between the plurality of communication passages increases as it goes along a feed direction of gas in the feed unit.

17. The laser welding apparatus according to claim 13,
wherein the inner jig includes:

a first part formed along the insertion direction, and having an inside in communication with the discharge unit; and
a second part formed from an end of the first part along the insertion direction, having a narrower cross-sectional area as it goes in the insertion direction, and having an inside in communication with the inside of the first part, and
wherein the first part and the second part form the gap with an inner surface of the outer jig.

18. The laser welding apparatus according to claim 17,
wherein when a height from a point where the first part and the second part are connected to an end of the second part in the insertion direction is $H_1$, and a height from the feed unit to an end of the outer body is $H_2$, a conditional equation is satisfied: $H_1/H_2 = 0.714$ to $0.786$.

19. The laser welding apparatus according to claim 17,

wherein a slot hole is formed in a contact surface of the outer body that contacts the welding target, and
wherein when a height from a point where the first part and the second part are connected to an end of the second part in the insertion direction is $H_1$, and a length of the slot hole is $L_1$, a conditional equation is satisfied: $H_1/L_1 = 0.233$ to $0.256$.

20. The laser welding apparatus according to claim 17,

wherein an empty space in communication with the gap is formed inside the first part and the second part,
wherein a slot hole is formed in a contact surface of the outer body that contacts the welding target to allow the laser emitted from the laser unit to pass through, and
wherein the laser unit emits the laser to allow the laser to pass through the empty space inside the first part and the second part and the slot hole and reach the welding target.

FIG.1

FIG.2

FIG.3

FIG.4

FIG.5

FIG.6

110b  110a                    110d

110e

1100

110d        1101                    110a    110b      111

FIG.7

110a
1101

1110
1111
1100
110c

111a

110e

$H_1$

$H_2$

FIG.8

FIG.9

FIG.10

## INTERNATIONAL SEARCH REPORT

| International application No. |
| --- |
| **PCT/KR2024/013274** |

**A.   CLASSIFICATION OF SUBJECT MATTER**

**B23K 37/04**(2006.01)i; **B23K 26/21**(2014.01)i; **B23K 26/14**(2006.01)i; **H01M 50/566**(2021.01)i

According to International Patent Classification (IPC) or to both national classification and IPC

**B.   FIELDS SEARCHED**

Minimum documentation searched (classification system followed by classification symbols)

B23K 37/04(2006.01); B21D 53/00(2006.01); B23K 26/142(2014.01); B23K 26/70(2014.01); B23K 9/00(2006.01); B23K 9/16(2006.01); H01M 50/531(2021.01); H01R 43/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 지그(jig), 용접(welding), 레이저(laser), 가스(gas), 클램프(clamp)

**C.   DOCUMENTS CONSIDERED TO BE RELEVANT**

| Category* | Citation of document, with indication, where appropriate, of the relevant passages | Relevant to claim No. |
| --- | --- | --- |
| Y | KR 10-2021-0048096 A (LG CHEM, LTD.) 03 May 2021 (2021-05-03)<br>See paragraph [0075], claims 1, 4, 6 and 7 and figures 6-9. | 1-20 |
| Y | JP 2013-237058 A (TOYO GAS ASSETSU CO., LTD.) 28 November 2013 (2013-11-28)<br>See paragraphs [0022] and [0023] and figures 1 and 2. | 1-20 |
| Y | KR 10-2021-0146134 A (LG ENERGY SOLUTION, LTD.) 03 December 2021 (2021-12-03)<br>See paragraphs [0028] and [0029] and figures 1 and 2. | 13-20 |
| A | KR 10-2013-0123648 A (POSCO) 13 November 2013 (2013-11-13)<br>See claims 1 and 4 and figures 1-5. | 1-20 |
| A | JP 2014-187012 A (FURUKAWA ELECTRIC CO., LTD. et al.) 02 October 2014 (2014-10-02)<br>See claim 1 and figure 5. | 1-20 |

☐ Further documents are listed in the continuation of Box C.  ☑ See patent family annex.

| | |
| --- | --- |
| *     Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **17 December 2024** | **17 December 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 714 587 A1

**INTERNATIONAL SEARCH REPORT**
Information on patent family members

International application No.

**PCT/KR2024/013274**

| Patent document cited in search report | | | Publication date (day/month/year) | Patent family member(s) | | | Publication date (day/month/year) |
|---|---|---|---|---|---|---|---|
| KR | 10-2021-0048096 | A | 03 May 2021 | CN | 114040828 | A | 11 February 2022 |
| | | | | CN | 114040828 | B | 29 March 2024 |
| | | | | EP | 3974099 | A1 | 30 March 2022 |
| | | | | EP | 3974099 | B1 | 14 August 2024 |
| | | | | US | 2022-0184738 | A1 | 16 June 2022 |
| | | | | WO | 2021-080207 | A1 | 29 April 2021 |
| JP | 2013-237058 | A | 28 November 2013 | JP | 5459730 | B2 | 02 April 2014 |
| KR | 10-2021-0146134 | A | 03 December 2021 | | None | | |
| KR | 10-2013-0123648 | A | 13 November 2013 | KR | 10-1360628 | B1 | 10 February 2014 |
| JP | 2014-187012 | A | 02 October 2014 | JP | 5931100 | B2 | 08 June 2016 |

Form PCT/ISA/210 (patent family annex) (July 2022)

**EP 4 714 587 A1**

**Patent documents cited in the description**

- KR 1020230117782